# EUROPEAN PATENT APPLICATION

(11) **EP 4 080 419 A1**
(43) Date of publication of application: **26.10.2022**
(21) Application number: 20913624.1
(22) Date of filing: 04.09.2020
(51) Int. Cl.: G06N 5/04

(54) **MODEL TRAINING METHOD AND APPARATUS**

(30) Priority: 16.01.2020 CN 202010049320
(71) Applicant: Huawei Cloud Computing Technologies Co., Ltd., Guizhou 550025 (CN)
(72) Inventor: LIU, Zhipiao, Shenzhen, Guangdong 518129 (CN)
(74) Representative: Thun, Clemens
(86) International application number: PCT/CN2020/113610
(87) International publication number: WO 2021/143155

(57) **Abstract**

Disclosed are a model training method and apparatus, which relate to the field of communications technologies, and are applied to a system including a first server (10) and a second server (20). The first server (10) is located in a private cloud and is used for model inference, and the second server (20) is located in a public cloud and is used for model training. A training model is evaluated based on an inference result and a model evaluation metric, to monitor an inference effect of the training model, and retrain the training model in a timely manner, thereby improving accuracy of the inference result, and ensuring performance of a service system. The method includes: obtaining, by the first server (10), a first training model from the second server (20) (S601), and inputting input data into the first training model for inference, to obtain an inference result (S602); then evaluating the first training model based on the inference result and a model evaluation metric, to obtain an evaluation result of the model evaluation metric (S603); and if an evaluation result of at least one model evaluation metric does not exceed a preset threshold corresponding to the model evaluation metric, sending a retraining instruction for the first training model to the second server (20) (S604).

## Description

This application claims priority to Chinese Patent Application No. 202010049320.1, filed with the China National Intellectual Property Administration on January 16, 2020 and entitled "MODEL TRAINING METHOD AND APPARATUS", which is incorporated herein by reference in its entirety.

### TECHNICAL FIELD

This application relates to the field of communication technologies, and in particular, to a model training method and apparatus.

### BACKGROUND

Data, algorithms, and computing power are three elements for implementing artificial intelligence (artificial intelligence, AI). As data collection methods become increasingly diversified, AI chips may obtain more data at lower costs. In addition, continuous breakthroughs in AI algorithms make the computing speed of AI chips faster and faster. Therefore, AI chips have increasingly strong computing power, and AI is becoming more widespread in real life. In the conventional technology, a hybrid cloud is usually used to perform AI model training and inference. To be specific, an "online training and offline inference" mode is used. Training data is first uploaded to an online training platform of a public cloud for model training, to determine a training model that meets requirements. Then, the training model is pushed down to an offline inference platform of a private cloud, and the offline inference platform publishes the training model as a service for inference. In this implementation, the computing power of the public cloud can be maximized to perform model training and inference while using the private cloud to ensure user data security.

In an actual production environment, after the hybrid cloud is used to perform model training, and the training model is determined, because input data of the training model is changed, an inference result obtained by performing inference by using the training model may be less accurate. In an existing AI model training mode in a hybrid cloud scenario, a service system (for example, a facial recognition system) cannot sense a decrease in inference accuracy of the training model in a timely manner, and may frequently falsely report or may be unavailable. For example, in a video surveillance scenario for security protection, aging, replacement, or installation position adjustment of a checkpoint camera (for example, a camera at a gate of a residential community) may cause a change in definition, an angle, or the like of a video shot by the checkpoint camera, that is, a change in input data of the training model. Using the changed input data and the training model to perform inference may greatly reduce accuracy of an inference result of a subsequent training model, and affect normal functioning of a video surveillance system for security protection.

### SUMMARY

This application provides a model training method and apparatus. In a hybrid cloud scenario, the training model is evaluated based on an inference result of a training model, and an evaluation result of a model evaluation metric of the training model is determined, to monitor an inference effect of the training model. Therefore, the training model is retrained in a timely manner based on the inference effect of the training model, to determine a training model with a better inference effect, thereby improving correctness of the inference result, and ensuring performance of a service system.

To achieve the foregoing objective, this application uses the following technical solutions.

According to a first aspect, an embodiment of this application provides a model training method, which is applied to a system including a first server and a second server. The first server is located in a private cloud and is used for model inference. The second server is located in a public cloud and is used for model training. The method includes: obtaining, by the first server, a first training model from the second server; and inputting, by the first server, input data into the first training model for model inference, to obtain an inference result. Then, the first server evaluates the first training model based on the inference result and a model evaluation metric, to obtain an evaluation result of the model evaluation metric. Finally, if an evaluation result of at least one model evaluation metric does not exceed a preset threshold corresponding to the model evaluation metric, the first server sends a retraining instruction for the first training model to the second server. The retraining instruction instructs the second server to retrain the first training model.

In conclusion, the first server may evaluate the model evaluation metric of the first training model, to determine the inference effect of the first training model, and monitor the inference effect of the first training model. Therefore, when the first training model has a poor inference effect, the retraining instruction used for model retraining is sent to the second server, so that the second server may retrain the training model in a timely manner based on the inference effect of the training model, to determine a training model with a better inference effect, thereby improving accuracy of the inference result, and ensuring performance of the service system.

In a possible implementation, after the inputting, by the first server, input data into the first training model for model inference, to obtain an inference result, the method further includes: sending, by the first server, the input data and the inference result to the second server, to implement data closed-loop in a model training and inference system in a hybrid cloud scenario. Therefore, in this application, the training model may be retrained by using the input data that is input into the training model for inference and the inference result obtained through model inference, thereby improving an inference effect of the training model, that is, accuracy of the inference result, and ensuring service system performance. The input data and the inference result are used to retrain the first training model.

In a possible implementation, the model evaluation metric includes at least one of the following: accuracy of the inference result, precision of the inference result, recall of the inference result, F1-score (F1-Score) of the inference result, and an area under a receiver operating characteristic ROC curve AUC of the inference result.

In a possible implementation, the method includes: if all evaluation results of model evaluation metrics exceed preset thresholds corresponding to the evaluation results, the first server does not send the retraining instruction for the first training model to the second server.

According to a second aspect, an embodiment of this application provides a model training method, which is applied to a system including a first server and a second server. The first server is located in a private cloud and is used for model inference. The second server is located in a public cloud and is used for model training. The method includes: obtaining, by the second server, a retraining instruction for a first training model, input data, and an inference result from the first server. The retraining instruction instructs the second server to retrain the first training model, the input data is data that is input into the first training model by the first server, and the inference result is a result obtained after the first server inputs the input data into the first training model for model inference. Then, the second server determines a retraining sample set based on the input data and the inference result, and retrains the first training model based on the retraining sample set, to determine a second training model, where the second training model is used to replace the first training model. Finally, the second server sends the second training model to the first server.

In a possible implementation, the obtaining, by the second server, a retraining instruction for a first training model, input data, and an inference result from the first server specifically includes: obtaining, by the second server, the input data and the inference result in response to the retraining instruction received from the first server.

In a possible implementation, the determining, by the second server, a retraining sample set based on the input data and the inference result specifically includes: annotating, by the second server, the input data, to obtain the annotated input data, and then storing the annotated input data and the inference result in the retraining sample set.

In a possible implementation, before the annotating, by the second server, the input data, to obtain the annotated input data, the method further includes: if the inference result is a correct inference result, reserving, by the second server, the inference result and input data corresponding to the inference result; or if the inference result is an incorrect inference result, deleting, by the second server, the inference result and input data corresponding to the inference result, or replacing, by the second server, the inference result with a correct inference result corresponding to the input data.

According to a third aspect, this application further provides a model training apparatus serving as a first server, which is applied to a system of the first server and a second server. The first server is located in a private cloud and is used for model inference, and the second server is located in a public cloud and is used for model training. The apparatus serving as the first server includes an obtaining unit, an inference unit, an evaluation unit, and a sending unit. The obtaining unit is configured to obtain a first training model from the second server. The inference unit is configured to input input data into the first training model for model inference, to obtain an inference result. The evaluation unit is configured to evaluate the first training model based on the inference result and a model evaluation metric, to obtain an evaluation result of the model evaluation metric. The sending unit is configured to: if an evaluation result of at least one model evaluation metric does not exceed a preset threshold corresponding to the model evaluation metric, send a retraining instruction for the first training model to a second server. The retraining instruction instructs the second server to retrain the first training model.

In a possible implementation, the model evaluation metric includes at least one of the following: accuracy of the inference result, precision of the inference result, recall of the inference result, F1-score (F1-Score) of the inference result, and an area under a receiver operating characteristic ROC curve AUC of the inference result.

In a possible implementation, the sending unit is further configured to send the input data and the inference result to the second server. The input data and the inference result are used to retrain the first training model.

According to a fourth aspect, in a possible implementation, the sending unit is further configured to: if all evaluation results of model evaluation metrics exceed preset thresholds corresponding to the evaluation results, skip sending a retraining instruction for the first training model to the second server.

This application further provides a model training apparatus serving as a second server, which is applied to a system of the first server and a second server. The first server is located in a private cloud and is used for model inference, and the second server is located in a public cloud and is used for model training. The apparatus serving as the second server includes an obtaining unit, a determining unit, a sending unit, and a processing unit. The obtaining unit is configured to obtain a retraining instruction for a first training model, input data, and an inference result from a first server. The determining unit is configured to determine a retraining sample set based on the input data and the inference result. The determining unit is further configured to retrain the first training model based on the retraining sample set, to determine a second training model. The second training model is used to replace the first training model. The sending unit is configured to send the second training model to the first server. The retraining instruction instructs the second server to retrain the first training model, the input data is data that is input, by the first server, into the first training model for model inference, and the inference result is a result obtained after the first server inputs the input data into the first training model for model inference.

In a possible implementation, the processing unit is configured to: if the inference result is a correct inference result, reserve, by the second server, the inference result and input data corresponding to the inference result; or if the inference result is an incorrect inference result, delete, by the second server, the inference result and input data corresponding to the inference result, or replace, by the second server, the inference result with a correct inference result corresponding to the input data.

In a possible implementation, the obtaining unit is specifically configured to obtain the input data and the inference result in response to the retraining instruction received from the first server.

In a possible implementation, the determining unit is specifically configured to: annotate the input data, to obtain the annotated input data; and store the annotated input data and the inference result in the retraining sample set.

According to a fifth aspect, this application provides a model training apparatus. The apparatus includes a processor, a memory, and a communication interface. The communication interface is configured to communicate with another device or a communication network, the memory is configured to store one or more programs, the one or more programs include computer-executable instructions, and when the apparatus runs, the processor executes the computer-executable instructions stored in the memory, to enable the apparatus to perform the model training method according to any one of the first aspect or the second aspect, and the optional implementations of the first aspect or the second aspect.

According to a sixth aspect, this application provides a computer program product including instructions. When the instructions are run by a processor, the computer is enabled to perform the model training method according to any one of the first aspect or the second aspect, and the optional implementations of the first aspect or the second aspect.

According to a seventh aspect, this application provides a computer-readable storage medium storing one or more programs. The computer-readable storage medium stores instructions. The one or more programs include the instructions, and when the instructions are executed by a processor, the computer is enabled to perform the model training method according to any one of the first aspect or the second aspect, and the optional implementations of the first aspect or the second aspect.

### BRIEF DESCRIPTION OF DRAWINGS

FIG. 1 is a schematic diagram 1 of a system used for AI model training and inference in a hybrid cloud scenario in the current technology;
FIG. 2 is a schematic diagram 2 of a system used for AI model training and inference in a hybrid cloud scenario in the current technology;
FIG. 3 is a schematic diagram of a system used for AI model training and inference in a hybrid cloud scenario according to an embodiment of this application;
FIG. 4 is a schematic diagram of a hardware structure of a chip according to an embodiment of this application;
FIG. 5 is a schematic diagram of a model training apparatus according to an embodiment of this application;
FIG. 6 is a schematic flowchart of a model training method according to an embodiment of this application;
FIG. 7 is a schematic diagram of an area under a receiver operating characteristic ROC curve AUC of an inference result according to an embodiment of this application;
FIG. 8 is a schematic diagram of a model training apparatus serving as a first server according to an embodiment of this application; and
FIG. 9 is a schematic diagram of a model training apparatus serving as a second server according to an embodiment of this application.

### DESCRIPTION OF EMBODIMENTS

The following first describes technical terms used in this application.

Cloud: A cloud is a server or a server cluster. A service provided by the server or the server cluster that forms the cloud is a cloud service (for example, storage, computing, or the like), or may be described as a cloud computing service, that is, a cloud service. A resource and a service required by a user is obtained, from the cloud through a network.

Private cloud (private cloud): A private cloud is also referred to as an internal cloud or an enterprise cloud, and is a cloud that provides cloud computing services for specific users (not the general public) through the Internet or a private internal network. The private cloud is usually deployed inside the firewall or in a place for hosting, to effectively ensure the security and quality of the provided services.

Public cloud (public cloud): A public cloud is a cloud that provides cloud computing services for all users through the Internet or a private internal network. The core of the public cloud is a shared resource service, which may be used in an open public network.

Hybrid cloud (hybrid cloud): A hybrid cloud is a cloud that integrates a public cloud and a private cloud to provide cloud computing services for users.

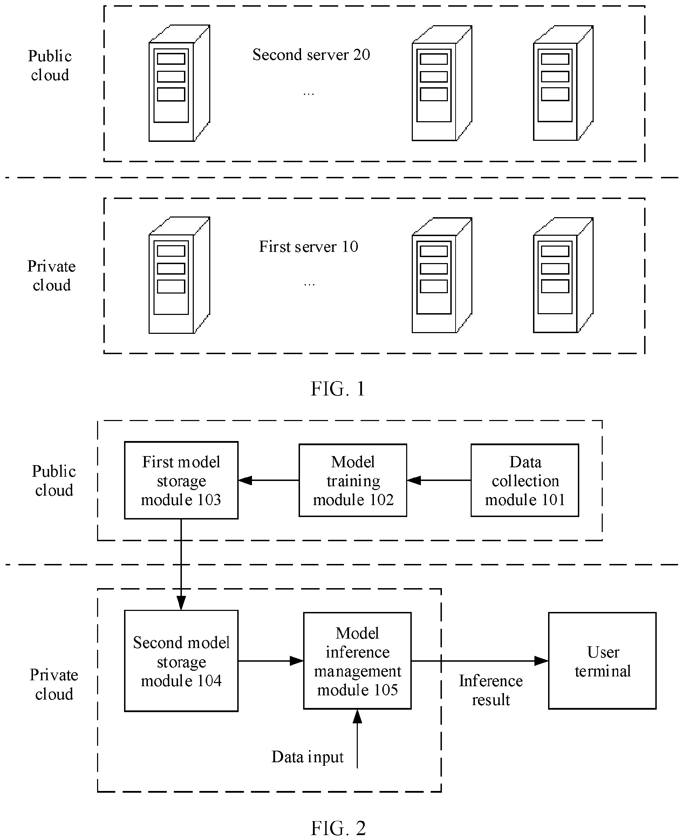

After the hybrid cloud is briefly described, a system used for AI model training and inference in a hybrid cloud scenario is first described with reference to FIG. 1.

As shown in FIG. 1, the system used for AI model training and inference in the hybrid cloud scenario may include a first server 10 and a second server 20. The first server 10 is located in a private cloud and is used for model inference. The second server 20 is located in a public cloud and is used for model training.

The first server 10 may be a server in the private cloud, or may be a server cluster including a plurality of servers in the private cloud. The second server 20 may be a server in the public cloud, or may be a server cluster including a plurality of servers in the public cloud.

As shown in FIG. 2, if modules are divided by function, the system used for AI model training and inference in the hybrid cloud scenario shown in FIG. 1 may include a data collection module 101, a model training module 102, a first model storage module 103, a second model storage module 104, and a model inference management module 105.

The data collection module 101, the model training module 102, and the first model storage module 103 are located in the second server 20. Specifically, if the second server 20 is a server in the public cloud, the data collection module 101, the model training module 102, and the first model storage module 103 are all located on the second server 20. If the second server 20 is a server cluster including a plurality of servers in the public cloud, the data collection module 101, the model training module 102, and the first model storage module 103 are located on a same server in the server cluster, or on different servers in the server cluster.

The data collection module 101 is configured to obtain data used for model training, add the obtained data used as a training sample to a training sample set, and then send the training sample set to the model training module 102. Usually, the data collection module 101 may store data obtained by the data collection module 101 by using an object storage service (OBS, object storage service).

The model training module 102 is configured to receive the training sample set sent by the data collection module 101, perform model training on a preset model based on the training sample set, to obtain a training model that meets a requirement of the application, and store the training model in the first model storage module 103. The preset model may be a pre-stored model (for example, a training model obtained through model training previously), or may be a model that is set based on an application scenario of the training model. For example, in a neuro-linguistic programming (NPL, neuro-linguistic programming) field, a user usually performs model training on some benchmark models by using a training sample set obtained by the user, to obtain a required training model. In this case, the preset model in this embodiment of this application is the benchmark model.

Optionally, the model training module 102 is configured to obtain a preset model used for model training from the first model storage module 103.

The first model storage module 103 is configured to obtain a trained training model from the model training module 102, and store the training model obtained by the first model storage module 103. The first model storage module 103 is further configured to store description information of the training model. The description information of the training model includes a name, usage, life cycle, and the like of the training model. In addition, the first model storage module 103 is configured to modify the description information of the training model. The first model storage module 103 is further configured to manage the life cycle of the training model based on the life cycle in the description information of the training model, duration for storing the training model by the first model storage module 103, and the like. In other words, the first model storage module 103 is configured to store, update, or delete the training model, the description information of the training model, and the like within the life cycle of the training model, and delete or update the training model, the description information of the training model, and the like after the life cycle of the training model ends.

For example, a time point at which the first model storage module 103 obtains a training model A is 11:30 a.m., and a life cycle of the training model A is 2 hours. In other words, the life cycle of the training model is from 11:30 a.m. to 1:30 p.m.. If a current moment is any time point from 11:30 a.m. to 1:30 p.m., the first model storage module 103 may update or delete the training model A stored in the first model storage module 103, or may modify the description information that is of the training model A and that is stored in the first model storage module 103. The first model storage module 103 may modify the description information of the training model A, to change the name and usage of the training model A, or prolong/shorten the life cycle of the training model A. In a time period from 11:30 a.m. to 1:30 p.m., if the first model storage module 103 does not change the life cycle of the training model A stored in the first model storage module 103, after 1:30 p.m., the life cycle of the training model A ends, and the first model storage module 103 deletes the training model A and the description information of the training model A that are stored in the first model storage module 103.

Optionally, the first model storage module 103 is further configured to store a preset model used for model training.

The first model storage module 103 is further configured to send the training model received by the first model storage module 103 from the model training module 102 to the second model storage module 104. Optionally, the first model storage module 103 is further configured to send the description information and the like of the training model to the second model storage module 104, so that the model inference management module 105 performs model inference by using the training model.

The second model storage module 104 is configured to obtain and store the training model sent by the first model storage module 103. Optionally, the second model storage module 104 is further configured to obtain and store the description information that is of the training model and that is sent by the first model storage module 103. For the description information, refer to the foregoing content. Details are not described herein again. The second model storage module 104 is further configured to modify the description information that is of the training model and that is stored in the second model storage module 104. In addition, the second model storage module 104 is configured to manage the life cycle of the training model based on the life cycle in the description information of the training model, duration for storing the training model by the second model storage module 104, and the like. For specific descriptions of managing the life cycle of the training model, refer to the foregoing content. Details are not described herein again. The second model storage module 104 is further configured to send the training model obtained by the second model storage module 104 from the first model storage module 103 to the model inference management module 105.

The second model storage module 104 and the model inference management module 105 are located on the first server 10. Specifically, if the first server 10 is a server in the private cloud, both the second model storage module 104 and the model inference management module 105 are located on the first server 10. If the first server 10 is a server cluster including a plurality of servers in the private cloud, the second model storage module 104 and the model inference management module 105 are located on a same server in the server cluster, or on different servers in the server.

The model inference management module 105 is configured to invoke the training model from the second model storage module 104, and publish the training model as a service. The model inference management module 105 is further configured to: for update and deletion of the training model in the second model storage module 104, update and delete the service that is corresponding to the training model and that is published by the model inference management module 105. The model inference management module 105 is further configured to: after receiving an instruction for providing a service, invoke a training model corresponding to the service, input input data into the training model for model inference, to obtain an inference result, and deliver the inference result to a user terminal. Optionally, the model inference management module 105 is further configured to clip the training model, for example, decrease a number of network layers, merge operators, and the like in a deep learning model, to accelerate an inference process and improve model inference efficiency.

In an existing manner of performing AI model training and inference by using a hybrid cloud, if input data that is input into a training model is changed (for example, in a video surveillance scenario, aging, replacement, or position adjustment of a surveillance camera in this scenario changes the input data that is input into the training model), accuracy of an inference result obtained by performing model inference by using the training model may be reduced. To be specific, the training model may have a poor inference effect, and performance of a service system may be affected.

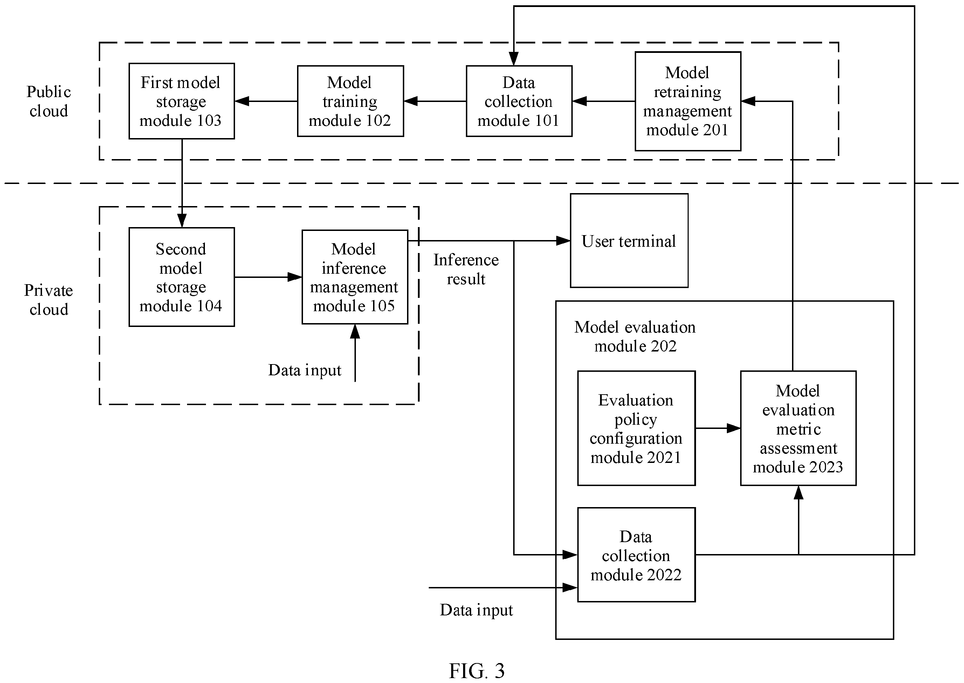

To resolve the foregoing problem, this application provides a model training method, which is applied to a hybrid cloud scenario. The training model may be evaluated based on a model evaluation metric and an inference result that is obtained by performing model inference on the training model, to monitor an inference effect of the training model, and retrain a training model with a poor inference effect in a timely manner, thereby improving accuracy of the inference result obtained through model inference, and ensuring performance of the service system (for example, a facial recognition system). Therefore, as shown in FIG. 3, if the system used for AI model training and inference in the hybrid cloud scenario is divided into modules by function, a model retraining management module 201 and a model evaluation module 202 are further added to the modules shown in FIG. 2 in this embodiment of this application.

If the second server 20 is a server in the public cloud, the data collection module 101, the model training module 102, the first model storage module 103, and the model retraining management module 201 are located on the second server 20. If the second server 20 is a server cluster including a plurality of servers in the private cloud, the data collection module 101, the model training module 102, the first model storage module 103, and the model retraining management module 201 are located on a same server in the server cluster, or on different servers in the server cluster.

The model retraining management module 201 is configured to receive a retraining instruction that is for the training model and that is sent by the model evaluation module 202. The model retraining management module 201 is further configured to: in response to the retraining instruction that is for the training model and that is received by the model retraining management module 201, instruct the data collection module 101 to obtain data used for model retraining from the model evaluation module 202, and add the obtained data used as a retraining sample to the retraining sample set sent to the model training module 102. Optionally, the model retraining management module 201 is further configured to: in response to the received retraining instruction, instruct the model training module 102 to obtain a training model used for model retraining from the first model storage module 103.

The data collection module 101 is further configured to obtain, from the model evaluation module 202 based on an instruction of the model retraining management module 201, data used for model retraining, that is, input data and an inference result. The input data is data that is input into the training model for model inference, and the inference result is an inference result obtained by inputting the input data into the training model for model inference. The data collection module 101 is further configured to add the data that is obtained by the data collection module 101 and that is used as a model retraining sample to the retraining sample set, and then send the retraining sample set to the model training module 102. Usually, the data collection module 101 is further configured to store the obtained data by using an object storage service (OBS, object storage service).

The model training module 102 is further configured to obtain, from the data collection module 101, a retraining sample set used for model retraining, and obtain, from the first model storage module 103 based on an instruction of the model retraining management module 201, a training model used for model retraining. The model training module 102 is further configured to retrain the training model based on the retraining sample set obtained by the model training module 102, to obtain a retraining model that meets a requirement of the application, and replace the training model stored in the first model storage module 103 with the retraining model.

If the first server 10 is a server in the private cloud, the second model storage module 104, the model inference management module 105, and the model evaluation module 202 are all located on the first server 10. If the first server 10 is a server cluster including a plurality of servers in the private cloud, the second model storage module 104, the model inference management module 105, and the model evaluation module 202 are located on a same server in the server cluster, or on different servers in the server cluster. For descriptions of the model training module 102, the first model storage module 103, the second model storage module 104, and the model inference management module 105, refer to the foregoing descriptions. Details are not described herein again.

The model evaluation module 202 is configured to evaluate the training model based on a model evaluation metric and an inference result that is obtained by inputting the input data into the training model for model inference, and determine an evaluation result of the model evaluation metric for the training model. Then, the model evaluation module 202 is further configured to determine an inference effect of the training model based on an evaluation result of the model evaluation metric and a preset threshold corresponding to the model evaluation metric. The model evaluation module 202 is further configured to send the retraining instruction for the training model to the model retraining management module 201 based on the inference effect of the training model. The model evaluation module 202 is further configured to send the data used for model retraining to the data collection module 101.

For example, if the model evaluation module 202 determines that the training model has a poor inference effect, the model evaluation module 202 sends the retraining instruction for the training model to the model retraining management module 201. If the model evaluation module 202 determines that the training model has a good inference effect, the model evaluation module 202 does not send the retraining instruction for the training model to the model retraining management module 201.

Optionally, the model evaluation module 202 may be further specifically divided into an evaluation policy configuration module 2021, a data collection module 2022, and a model evaluation metric assessment module 2023.

The evaluation policy configuration module 2021 is used to configure an evaluation policy of the training model, including configuring at least one model evaluation metric used to evaluate the training model, an evaluation rule of the model evaluation metric, a preset threshold corresponding to the model evaluation metric, a selection rule of input data and an inference result that are used to evaluate the model evaluation metric, and a retraining trigger policy for the training model. The input data is data that is input into the training model for model inference, and the inference result is a prediction result obtained by inputting the input data into the training model for model inference. Therefore, there is a correspondence between the input data and the inference result. The evaluation policy configuration module 2021 is further configured to: send, to the data collection module 2022, the selection rule of input data and an inference result that are used to evaluate the model evaluation metric, the at least one model evaluation metric used to evaluate the training model, and the evaluation rule of the model evaluation metric; and send, to the model evaluation metric assessment module 2023, the at least one model evaluation metric used to evaluate the training model, the evaluation rule of the model evaluation metric, the preset threshold corresponding to the model evaluation metric, and the retraining trigger policy for the training model.

The data collection module 2022 is configured to obtain the input data and the inference result, and send the input data and the inference result that are obtained by the data collection module 2022 to the data collection module 101. The data collection module 2022 is further configured to: obtain, from the evaluation policy configuration module 2021, information such as the selection rule of input data and an inference result that are used to evaluate the model evaluation metric, the at least one model evaluation metric used to evaluate the training model, and the evaluation rule of the model evaluation metric; determine, based on the information, the input data and the inference result that are used for model evaluation; and send the input data and the inference result that are used for model evaluation to the model evaluation metric assessment module 2023.

The model evaluation metric assessment module 2023 is configured to: obtain, from the data collection module 2022, the input data and the inference result that are used for model evaluation; and obtain, from the evaluation policy configuration module 2021, the at least one model evaluation metric used to evaluate the training model, the evaluation rule of the model evaluation metric, the preset threshold corresponding to the model evaluation metric, and the retraining trigger policy for the training model. The model evaluation metric assessment module 2023 is further configured to determine, by using the input data and the inference result that are used for model evaluation and based on the at least one model evaluation metric used to evaluate the training model and the evaluation rule of the model evaluation metric, an evaluation result of the at least one model evaluation metric used to evaluate the training model. The model evaluation metric assessment module 2023 is further configured to determine an inference effect of the training model based on the evaluation result of the model evaluation metric and the preset threshold corresponding to the model evaluation metric. The model evaluation metric assessment module 2023 is further configured to determine, based on the retraining trigger policy for the training model, whether to send the retraining instruction for the training model to the model retraining management module 201.

For example, the retraining trigger policy for the training model is as follows: If an evaluation result of the at least one model evaluation metric used to evaluate the training model does not exceed a preset threshold corresponding to the model evaluation metric, the model evaluation metric assessment module 2023 determines that the training model has a poor inference effect, and sends the retraining instruction for the training model to the model retraining management module 201. If all evaluation results of the model evaluation metrics used to evaluate the training model exceed preset thresholds corresponding to the evaluation results, the model evaluation metric assessment module 2023 determines that the training model has a good inference effect, and does not send the retraining instruction for the training model to the model retraining management module 201.

Optionally, division is performed based on functional modules. The system shown in FIG. 2 and FIG. 3 that performs AI model training and inference by using a hybrid cloud may further include a data annotation module. The data annotation module is loosely coupled to another module. The data collection module 101 is further configured to: after obtaining data used for model training or data used for model retraining, send the obtained data used for model training/model retraining to the data annotation module. Then, the data annotation module is configured to annotate the received data used for model training/model retraining, and send the annotated data to the data collection module 101. Finally, the data collection module 101 adds the annotated data that is obtained from the data annotation module and that is used as a training sample/retraining sample to the training sample set/retraining sample set, so that the model training module 102 may perform model training on a preset model by using the data in the training sample set/retraining sample set, to obtain a training model that meets a requirement, or perform model retraining on the training model, to obtain a retraining model.

For example, in a scenario in which objects in an image are classified, a data annotation process adds a rectangular frame to an object in the image by using an annotation tool, and then adds a label, for example, "a cat", "a mobile phone", or the like, to the object in the rectangular frame.

For other functions of the data collection module 101 and the model training module 102, and functions of the first model storage module 103, the second model storage module 104, and the model inference management module 105, refer to the foregoing descriptions. Details are not described herein again.

It should be noted that, in the foregoing process, in this application, data closed-loop in a model training and inference system in a hybrid cloud scenario may be further implemented. To be specific, end-to-end service closed-loop for model inference, model evaluation, model retraining, retraining model delivery, and retraining model inference may be implemented. Therefore, in this application, when the inference effect of the training model deteriorates due to factors such as change in the input data caused by the environment change, the training model may be retrained in a timely manner by using the input data that is input into the training model for inference and the inference result obtained through model inference, and then model inference is performed by using the retraining model, thereby improving an inference effect of the training model, that is, accuracy of the inference result, and ensuring service system performance.

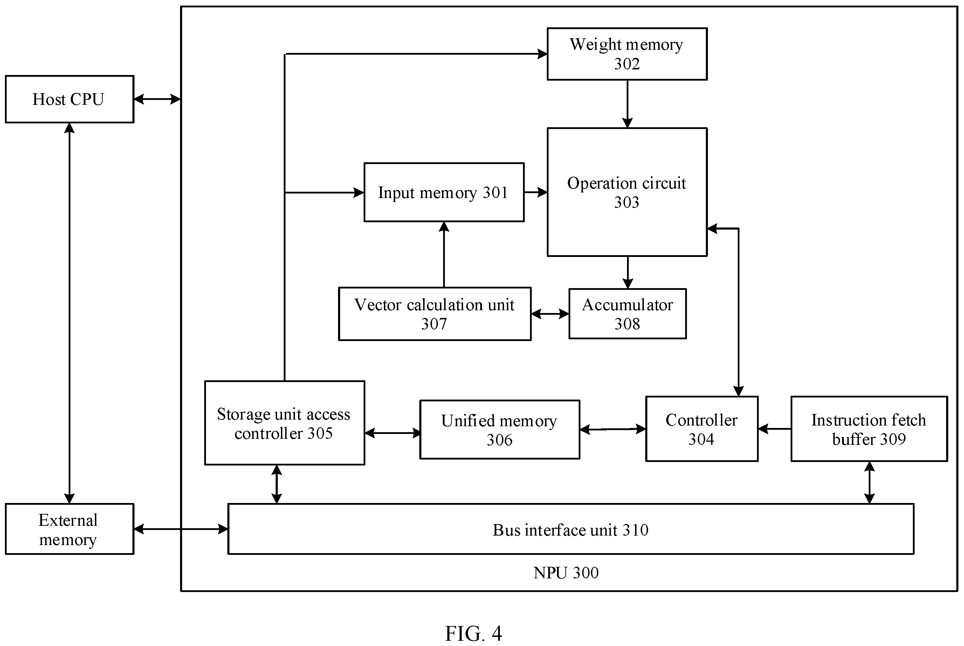

FIG. 4 shows a hardware structure of a chip according to an embodiment of this application. The chip includes a neural-network processing unit 300. The chip may be disposed in the first server 10 and/or the second server 20 shown in FIG. 1, and configured to complete work of the modules shown in FIG. 2 or FIG. 3, including obtaining a training model through model training, performing model inference by using the training model, performing model evaluation on the training model, obtaining a retraining model through model retraining, and the like.

The neural-network processing unit NPU 300 is mounted, as a coprocessor, to a host central processing unit (central processing unit, CPU) (host CPU). The host CPU assigns a task. A core part of the NPU 300 is an operation circuit 303. A controller 304 controls the operation circuit 303 to extract data from a memory (a weight memory or an input memory) and perform an operation.

In some implementations, the operation circuit 303 includes a plurality of processing engines (process engine, PE) inside. In some implementations, the operation circuit 303 is a two-dimensional systolic array. The operation circuit 303 may alternatively be a one-dimensional systolic array or another electronic circuit capable of performing mathematical operations such as multiplication and addition. In some implementations, the operation circuit 303 is a general-purpose matrix processor.

For example, it is assumed that there is an input matrix A, a weight matrix B, and an output matrix C. The operation circuit 303 fetches, from a weight memory 302, data corresponding to the matrix B, and buffers the data on each PE in the operation circuit 303. The operation circuit 303 fetches data of the matrix A from an input memory 301, to perform a matrix operation on the matrix B, and stores an obtained partial result or an obtained final result of the matrix in an accumulator (accumulator) 308.

A vector calculation unit 307 may perform further processing such as vector multiplication, vector addition, an exponent operation, a logarithmic operation, or value comparison on output of the operation circuit 303. For example, the vector calculation unit 307 may be configured to perform network calculation, such as pooling (pooling), batch normalization (batch normalization), or local response normalization (local response normalization), at a non-convolution/non-FC layer in a neural network.

In some implementations, the vector calculation unit 307 can store a processed output vector in the unified memory 306. For example, the vector calculation unit 307 may apply a non-linear function to the output, for example, a vector of an accumulated value, of the operation circuit 303, to generate an activation value.

In some implementations, the vector calculation unit 307 generates a normalized value, a combined value, or both.

In some implementations, the processed output vector can be used as an activation input to the operation circuit 303. For example, the processed output vector can be used at a subsequent layer in the neural network.

A unified memory 306 is configured to store input data and output data. A storage unit access controller 305 (direct memory access controller, DMAC) stores input data in an external memory to the input memory 301 and/or the unified memory 306, stores weight data in the external memory into the weight memory 302, and stores data in the unified memory 306 into the external memory.

A bus interface unit (bus interface unit, BIU) 310 is configured to implement interaction between the host CPU, the DMAC, and an instruction fetch buffer 309 through a bus.

The instruction fetch buffer (instruction fetch buffer) 309 connected to the controller 304 is configured to store instructions used by the controller 304. The controller 304 is configured to invoke the instructions buffered in the instruction fetch buffer 309, to control a working process of an operation accelerator.

Usually, the unified memory 306, the input memory 301, the weight memory 302, and the instruction fetch buffer 309 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

In FIG. 1 to FIG. 3, the host CPU and the NPU may cooperate to implement corresponding algorithms of functions required by the first server 10 and the second server 20 in FIG. 1. An operation of each module in the system shown in FIG. 2 or FIG. 3 may be performed by the operation circuit 303 or the vector calculation unit 307.

The first server 10 and the second server 20 in FIG. 1 described above can perform the steps of the model training method in embodiments of this application. The chip shown in FIG. 4 may also be configured to perform the steps of the model training method in embodiments of this application.

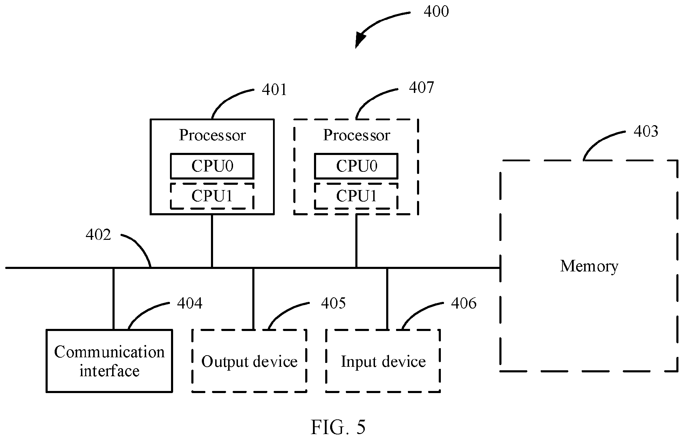

Refer to FIG. 5. This application further provides a model training apparatus. The model training apparatus 400 includes one or more processors such as a processor 401 and/or a processor 407, at least one communication interface such as a communication interface 404, and a communication line 402. Optionally, the communications apparatus 400 may further include a memory 403. The following describes the processor 401 as an example.

The processor 401 may be a general-purpose central processing unit (central processing unit, CPU), a microprocessor, an application-specific integrated circuit (application-specific integrated circuit, ASIC), a field programmable gate array (Field Programmable Gate Array, FPGA), or one or more integrated circuits that integrate a plurality of processing circuit functions (for example, a CPU and an ASIC).

The communication line 402 may include one or more paths for connecting different components.

The communication interface 404 may be a transceiver circuit, and is configured to communicate with another device or a communication network, for example, a cloud computing network, the Ethernet, a radio access network (radio access network, RAN), a wireless local area network (wireless local area network, WLAN), or the like. For example, the transceiver circuit may be an apparatus such as a transceiver or a transceiver machine. Optionally, the communication interface 404 may alternatively be an input/output (input/output, I/O) circuit of the processor 401, and is configured to implement signal input and signal output of the processor 401.

The memory 403 may be an apparatus having a storage function. For example, the memory 403 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a blue-ray optical disc, and the like), a magnetic disk storage medium or another magnetic storage device, or any other medium that can be configured to carry or store expected program code in a form of instructions or a data structure and that can be accessed by a computer. However, the memory 403 is not limited thereto. The memory 403 may exist independently, and is connected to the processor 401 through the communication line 402. Certainly, the memory 403 may also be integrated with the processor 401.

The memory 403 is configured to store computer-executable instructions for executing the solutions in this application, and the processor 401 controls the execution. The processor 401 is configured to read and execute the computer instructions (for example, used for a CPU) or a configuration file (for example, used for an FPGA) stored in the memory 403, to implement a model training method provided in embodiments of this application.

Alternatively, optionally, in this embodiment of this application, the processor 401 may perform related processing functions in the model training method provided in the following embodiments of this application. The communication interface 404 is responsible for communicating with another device or another communication network. This is not specifically limited in this embodiment of this application.

Optionally, the computer-executable instructions in this embodiment of this application may also be referred to as application program code. This is not specifically limited in this embodiment of this application.

During specific implementation, in an embodiment, the processor 401 may include one or more CPUs, for example, a CPU 0 and a CPU 1 in FIG. 5.

During specific implementation, in an embodiment, the model training apparatus 400 may also include a plurality of processors, for example, the processor 401 and a processor 407 in FIG. 5. Each of these processors may be a single-core (single-CPU) processor, or may be a multi-core (multi-CPU) processor. The processor herein may be one or more devices, circuits, and/or processing cores configured to process data (for example, computer program instructions).

In a specific implementation, in an embodiment, the model training apparatus 400 may further include an output device 405 and an input device 406. The output device 405 communicates with the processor 401, and may output information in a plurality of manners. For example, the output device 405 may be a touchscreen, a liquid crystal display (liquid crystal display, LCD), a light emitting diode (light emitting diode, LED) display device, a cathode ray tube (cathode ray tube, CRT) display device, a projector (projector), a printer (printer), or the like. The input device 406 communicates with the processor 401, and may receive an input from a user in a plurality of manners. For example, the input device 406 may be a mouse, a keyboard, a touchscreen device, or a sensor device.

The model training apparatus 400 sometimes may also be referred to as a training device, and may be a general-purpose device or a dedicated device. For example, the training device may be a client, a desktop computer, a portable computer, a network server, a personal digital assistant (personal digital assistant, PDA), a mobile phone, a tablet computer, a wireless terminal device, an embedded device, or a device having a similar structure. Certainly, the model training apparatus 400 may alternatively be a software and/or hardware entity disposed inside each of the foregoing single devices, for example, a chip or a chip system configured to execute a task provided in embodiments of this application. A type of the model training apparatus 400 is not limited in this embodiment of this application.

It should be understood that FIG. 5 is merely a simplified schematic diagram of an example for ease of understanding. The model training apparatus may further include another component, circuit, or apparatus not drawn in FIG. 5.

In this embodiment of this application, the model training apparatus 400 shown in FIG. 5 may perform a model training method shown in FIG. 5.

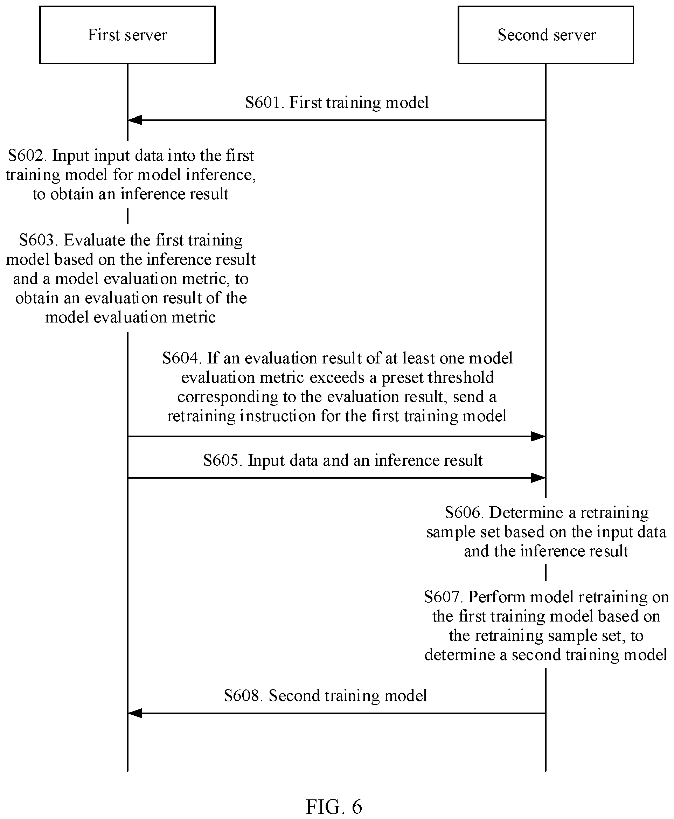

This application further provides a model training method, which is applied to the system described in FIG. 1. The following describes the model training method in this application with reference to FIG. 6. The method mainly includes steps S601 to S608.

S601: A first server obtains a first training model from a second server.

The first training model is obtained by performing model training on a preset model by the second server. The preset model may be a model pre-stored in the system, or may be a model determined based on a requirement of an application scenario of the required first training model.

For example, in a neuro-linguistic programming (NPL, neuro-linguistic programming) field, a user usually performs model training on some benchmark models, for example, a machine translation model, a sentiment analysis model, and the like, by using a training sample set obtained by the user, to obtain a required training model. The preset model in this embodiment of this application is the benchmark model. If a current application scenario is a text translation scenario, the preset model may be the machine translation model. If the current application scenario is a scenario of analyzing sentiment expressed in a text, the preset model is the sentiment analysis model.

After the second server performs model training on the preset model by using obtained training data, to obtain a first training model, the second server stores the first training model and description information of the first training model, and delivers the first training model and the description information of the first training model to the first server. The description information of the first training model includes a name, usage, life cycle, and the like of the first training model. After the first server obtains the first training model and the description information of the first training model that are delivered by the second server, the first server stores the received first training model and the received description information, and publishes the first training model as a service, so that the user may invoke the related first training model through the service to perform model inference.

For example, the description information of the first training model includes the name of the first training model, for example, a facial recognition model, the usage of the first training model, for example, facial recognition, and the life cycle of the first training model, for example, 1 hour. Optionally, the description information of the first training model includes storage time of the first training model, for example, 11:30 a.m., and storage duration of the first training model, for example, 0.5 hour. In this case, the storage duration of the first training model is 0.5 hour.

Optionally, the first server or the second server may modify the description information of the first training model stored in the first server or the second server, or may delete or update the first training model based on the life cycle of the first training model.

S602: The first server inputs input data into the first training model for model inference, to obtain an inference result.

After the first server receives a service invocation request sent by a user terminal and the input data used for model inference, the first server determines the first training model corresponding to the service through the service published by the first server. Then, the first server inputs the input data used for model inference, for example, data input by the user or locally stored data, into the first training model for model inference, to obtain an inference result, and sends the inference result to the corresponding user terminal.

For example, the first training model is a facial recognition model. After step S602, the first server obtains the facial recognition model sent by the second server, stores the facial recognition model, and publishes the facial recognition model as a facial recognition service. Then, if the user terminal needs to recognize a face in an image, the user terminal sends a service invocation request for the facial recognition service and the image to the first server. The first server determines a facial recognition model corresponding to the facial recognition service that needs to be invoked, and inputs the image into the facial recognition model for model inference, to determine an inference result. For example, the inference result is that a person in the image is A. Finally, the first server sends the inference result, that is, the person in the image is A, to the user terminal.

Based on the input data, model inference can be classified into batch inference and real-time inference. A process of inputting data obtained in real time into the training model for model inference to obtain an inference result is a real-time inference process. A process of inputting a plurality of pieces of pre-stored data into the training model for model inference to obtain a plurality of inference results is a batch inference process. There is a correspondence between the plurality of inference results and the plurality of pieces of data.

In the real-time inference process, the first server receives input data, that is, data sent by the user terminal in real time, and a service invocation request. Then, the first server invokes, based on the received service invocation request and through an application programming interface (API, application programming interface), an inference service corresponding to the service invocation request, and then inputs the input data into the first training model corresponding to the inference service for model inference, to obtain an inference result.

For example, a turnstile in a facial recognition scenario is used as an example. After capturing a facial image by using a camera, the facial image and a facial recognition service invocation request are further sent to the first server through the API between the turnstile and the first server. Then, the first server invokes a corresponding facial recognition model based on the facial recognition service invocation request (for example, an invocation request in an http format), recognizes a facial image by using the facial recognition model, and sends a recognition result to the turnstile, so that the turnstile may be opened or keep closed based on the recognition result.

In the batch inference process, the first server receives input data and a service invocation request. The input data is pre-stored data, or path information (for example, a network file system (NFS, network file system) address, a file transfer protocol (FTP, file transfer protocol) address, and the like) of the pre-stored input data. Then, the first server obtains the pre-stored input data based on the path information, invokes a corresponding first training model based on the service invocation request, and inputs the obtained pre-stored data into the first training model for model inference, to obtain an inference result.

For example, a facial recognition scenario is used as an example. The user terminal sends a facial recognition service invocation request and the path information (for example, an NFS address) of the input data to the first server. The first server obtains, based on the NFS address, an image stored in a folder to which the address points, and invokes a facial recognition model corresponding to the facial recognition service. For example, the folder stores 10 images. The first server separately inputs the 10 images into the facial recognition model for model inference, to obtain 10 inference results.

After the first server inputs the input data into the first training model for model inference and obtains an inference result, the first server stores the input data and the inference result. Optionally, the first server may further send the obtained input data and the obtained inference result to the second server, so that the second server may retrain the first preset model based on the received input data and the received inference result.

S603: The first server evaluates the first training model based on the inference result and a model evaluation metric, to obtain an evaluation result of the model evaluation metric.

The model evaluation metric includes at least one of the following: accuracy of the inference result, precision of the inference result, recall of the inference result, F1-score (F1-Score) of the inference result, and an area under a receiver operating characteristic ROC curve AUC of the inference result. Optionally, the model evaluation metric may further include a mean absolute error (MAE, mean absolute error), a mean square error (MSE, mean square error), and the like. Usually, the model evaluation metric such as the accuracy, the precision, the recall, the F1-score (F1-Score), and the AUC is mainly used to evaluate a binary classification model, and the model evaluation metric such as the MAE and the MSE is mainly used to evaluate a regression model (for example, the facial recognition model).

Optionally, the model evaluation metric used to evaluate the first training model is determined based on the current application scenario, to be specific, determined based on the usage of the first training model.

For example, in the current application scenario, if a better evaluation effect can be obtained by evaluating the inference effect of the first training model by using the recall of the inference result compared with evaluating the inference effect of the first training model by using other model evaluation metrics, the recall of the inference result may be set as a model evaluation metric used to evaluate the inference effect of the first training model.

For example, in an application scenario, the user may alternatively set, based on a requirement of the application scenario, the model evaluation metric used to evaluate the first training model to accuracy of the inference result, recall of the inference result, and F1-score of the inference result.

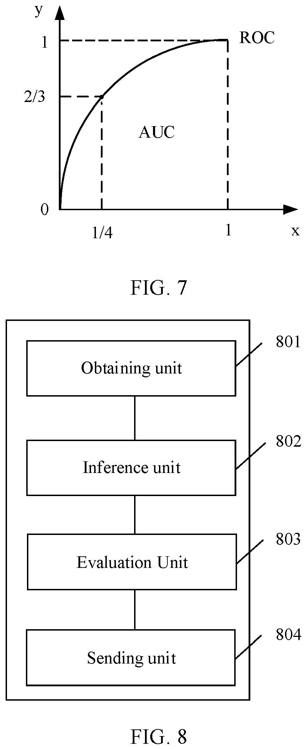

For example, the first training model is a binary classification model. Numbers on 60 cards of 100 cards are odd numbers, in other words, there are 60 positive samples, and numbers on 40 cards are even numbers, in other words, there are 40 negative samples. The numbers on the 100 cards are predicted by using the first training model. In other words, 100 times of inference are performed, and 100 inference results are generated. In the positive samples, inference results corresponding to 40 cards are accurate, and 20 inference results are incorrect. In the negative samples, inference results corresponding to 30 cards are correct, and 10 inference results are incorrect. A quantity TP of positive samples that are predicted as positive samples is 40, a quantity FN of positive samples that are predicted as negative samples is 20, a quantity FP of negative samples that are predicted as positive samples is 10, and a quantity TN of negative samples that are predicted as negative samples is 30. Then, based on the evaluation rule of the model evaluation metric, it may be determined that the accuracy (Accuracy) of the inference result is (TP+TN)/(TP+FN+FP+TN), that is, 70%, the precision (Precision) of the inference result is TP/(TP+FP), that is, 80%, the recall (Recall) of the inference result is TP/(TP+FN), that is, 2/3, and the F1-score (F1-Score) of the inference result is harmonic mean 2*Presicion*^{∗}*Recall* / (*Presicion* + *Recall*) of the precision and recall, that is, 8/11. The ROC and the AUC are determined by using x=*FP* / (*FP* + *TN*) as a horizontal coordinate and y=*TP* / (*TP* + *FN*) as a vertical coordinate, where values of x and y are [0, 1]. For example, in the ROC and the AUC shown in FIG. 7, coordinates of a point A on the ROC are (1/4, 2/3).

Optionally, model evaluation may be periodically performed on the first training model. For example, the model evaluation is performed at a preset time interval by using an inference result of real-time inference within a first preset time interval, to obtain the evaluation result of the model evaluation metric of the first training model. Then, the model evaluation is performed again based on an inference result of real-time inference within a second preset time interval, to obtain the evaluation result of the model evaluation metric of the first training model again.

For example, real-time inference is performed on the first training model for 20 times between 10:00 a.m. and 12:00 a.m. For example, the preset time interval is 40 min. The model evaluation is performed once by using an inference result of real-time inference between 10:00 a.m. and 10:40 a.m., to obtain an evaluation result of the model evaluation metric of the first training model. Then, the model evaluation is performed by using an inference result of real-time inference between 10:40 am and 11:20 am, to obtain an evaluation result of the model evaluation metric of the first training model again. Finally, the model evaluation is performed by using an inference result of real-time inference between 11:20 a.m. and 12:00 a.m., to obtain an evaluation result of the model evaluation metric of the first training model once again.

Optionally, evaluation is performed based on a preset frequency interval by using input data of batch inference or real-time inference and an inference result corresponding to the input data, to obtain the evaluation result of the model evaluation metric of the first training model.

For example, the preset frequency interval is 1 time. If batch inference is performed on the first training model for 5 times, that is, A, B, C, D, and E, the model evaluation is performed by separately using inference results of the batch inference A, C, and E, to obtain three groups of evaluation results of the model evaluation metrics of the first training model.

Optionally, before the step S603 is performed, an evaluation policy of the first training model needs to be configured, including configuring at least one model evaluation metric used to evaluate the training model, an evaluation rule of the model evaluation metric, a preset threshold corresponding to the model evaluation metric, a selection rule of input data and an inference result that are used to evaluate the model evaluation metric, and a retraining trigger policy for the training model. For a detailed description of the evaluation policy, refer to the foregoing description. Details are not described herein again. Optionally, the first server may further configure storage paths of the input data and the inference result.

S604: If an evaluation result of at least one model evaluation metric does not exceed a preset threshold corresponding to the model evaluation metric, the first server sends a retraining instruction for the first training model.

The retraining instruction for the first training model instructs the second server to perform model retraining on the first training model.

Optionally, if the evaluation result of the at least one model evaluation metric does not exceed the preset threshold corresponding to the model evaluation metric, the first server determines that the first training model has a poor inference effect, and sends the retraining instruction for the first training model to the second server. If all evaluation results of the model evaluation metrics exceed preset thresholds corresponding to the evaluation results, the first server determines that the first training model has a good inference effect and does not need to be updated. In this case, the first server does not send the retraining instruction for the first training model to the second server. The preset threshold corresponding to the evaluation result of the model evaluation metric may be preset based on a current application scenario, or may be preset by a user.

For example, the model evaluation metric includes at least one of the following: accuracy of the inference result, precision of the inference result, recall of the inference result, F1-score of the inference result, and an area under an ROC AUC of the inference result. If the accuracy of the inference result does not exceed a preset accuracy threshold, and/or the precision of the inference result does not exceed a preset precision threshold, and/or the recall of the inference result does not exceed a preset accuracy threshold, and/or the AUC of the inference result does not exceed a preset AUC threshold, and/or the F1-score of the inference result does not exceed a preset F1-score threshold, the first server determines that the first training model has a poor inference effect, and sends the retraining instruction for the first training model to the second server. If the accuracy of the inference result exceeds the preset accuracy threshold, the precision of the inference result exceeds the preset precision threshold, the recall of the inference result exceeds the preset accuracy threshold, the AUC of the inference result exceeds the preset AUC threshold, and the F1-score of the inference result does not exceed the preset F1-score threshold, the first server determines that the first training model has a good inference effect, and does not send the retraining instruction for the first training model to the second server.

Optionally, in another possible implementation, if all the evaluation results of the model evaluation metrics do not exceed the preset thresholds corresponding to the evaluation results, the first server determines that the first training model has a poor inference effect, and sends the retraining instruction for the first training model to the second server. If the evaluation result of the at least one model evaluation metric exceeds the preset threshold corresponding to the model evaluation metric, the first server determines that the first training model has a good inference effect and does not need to be updated. In this case, the first server does not send the retraining instruction for the first training model to the second server.

Optionally, in a possible implementation, after a model evaluation metric used to evaluate the first training model is determined based on a requirement of an application scenario, and the step S604 is performed, the user may further configure, based on the requirement of the application scenario, a trigger condition for sending the retraining instruction to the second server by the first server. When an evaluation result of the model evaluation metric used to evaluate the first training model meets the trigger condition, the first server sends the retraining instruction for the first training model to the second server. It may be understood that the first server sends the retraining instruction for the first training model, that is, retraining for the first training model is enabled.

For example, in a current service scenario, the user sets, based on a requirement of the service scenario, three model evaluation metrics used to evaluate the first training model. The three model evaluation metrics are respectively accuracy of the inference result, recall of the inference result, and F1-score of the inference result. Then, the user may determine, based on a requirement of the service scenario, that a condition for triggering the first server to send the retraining instruction to the second server is as follows: If an evaluation result of at least one of the accuracy of the inference result and the F1-score of the inference result does not exceed the preset threshold corresponding to the model evaluation metric, and an evaluation result of the recall of the inference result does not exceed the preset threshold corresponding to the model evaluation metric, the first server sends the retraining instruction for the first training model to the second server. It is assumed that for the first training model, the evaluation result of the accuracy of the inference result is a, the evaluation result of the F1-score of the inference result is b, the evaluation result of the recall of the inference result is c, and the preset thresholds corresponding to a, b, and c are respectively A, B, and C. In this case, if a≤A and c≤C, regardless of whether b is greater than B, the first server sends the retraining instruction for the first training model to the second server. If b≤B and c≤C, regardless of whether a is greater than A, the first server sends the retraining instruction for the first training model to the second server. If a>A and b>B, regardless of whether c is greater than C, the first server does not send the retraining instruction for the first training model to the second server. If c>C, regardless of whether a is greater than A and whether b is greater than B, the first server does not send the retraining instruction for the first training model to the second server.

It should be noted that through the foregoing process, in any service scenario, the first server may periodically or aperiodically obtain the inference result used for model evaluation, evaluate the inference effect of the training model based on a preconfigured evaluation policy of the training model and a preconfigured retraining trigger policy of the training model, and then determine to or not to trigger retraining for the training model, to monitor the inference effect of the training model, and retrain the training model with a poor inference effect in a timely manner, thereby ensuring performance of the service system.

S605: The second server obtains input data and an inference result from the first server.

The input data is data that is input, by the first server, into the first training model for model inference, and the inference result is an inference result obtained after the first server inputs the input data into the first training model for model inference.

In response to the retraining instruction received by the second server from the first server, the second server sends, to the first server, an obtaining request for input data and an inference result corresponding to the input data. The obtaining request is used to request the first server to send, to the second server, the input data that is input into the first training model for model inference and the inference result corresponding to the input data. Then, the first server sends data to the second server in response to the obtaining request. The data includes input data that is input into the first training model by the first server, and an inference result obtained by performing model inference after the input data is input into the first training model.

Optionally, in another possible implementation, when the first server sends the retraining instruction, the first server sends the input data and the inference result corresponding to the input data to the second server.

Optionally, in another possible implementation, after the step S602, the second server may first perform the step S605, and then perform the steps S603 and S604. In this case, the step S605 may be periodically performed. The second server periodically obtains, from the first server based on the preset time interval or the preset frequency interval, the input data and the inference result corresponding to the input data that are used for model evaluation. In other words, the first server may periodically send, to the second server based on the preset time interval or the preset frequency interval, the input data and the inference result corresponding to the input data that are used for model evaluation.

It should be noted that compared with periodically performing the step S605, after the step S604, the second server obtains, in response to the received retraining instruction, the input data and the inference result that are used for model evaluation, to retrain the first training model, so that when the input data and the inference result of the first training model are sent to the first server, resources used for data sending may be saved.

Optionally, in another possible implementation, the first server and the second server may not perform the steps S603 and S604, but directly perform the step S605 after the step S602, and periodically or aperiodically send the retraining instruction to the second server, so that the second server retrains the first training model based on the retraining instruction by using the input data and the inference result corresponding to the input data, to determine the second training model.

It should be noted that, in this technical solution, model evaluation is not performed and the second server is directly instructed to perform model retraining, so that the retraining model may well match the input data in the current environment, to achieve a good inference effect. However, the model may be retrained excessively frequently, or the model may be retrained when the inference effect of the existing training model is good. This may cause heavy computing load and unnecessary consumption of software and hardware resources. In addition, if the training model used for model inference in the service system is changed excessively frequently, the service system may be unstable, and the service system performance may be affected. After model evaluation is performed, the retraining instruction is sent to the second server based on the inference effect of the model, so that the model may be retrained when necessary. This may well reduce waste of software and hardware resources such as bandwidth, and ensure stable running of the service system.

S606: The second server determines a retraining sample set based on the input data and the inference result.

In response to the received retraining instruction for the first training model, the second server adds, to the retraining sample set used for model retraining, the input data and the inference result corresponding to the input data that are of the first training model and that are obtained by the second server from the first server. The retraining sample set stores training data used for model retraining.

Optionally, after the second server obtains the input data and the inference result corresponding to the input data, the second server first annotates the input data, to obtain the annotated input data, and then adds the annotated input data and the inference result to the retraining sample set, to obtain the retraining sample set used for model retraining.

Optionally, after the second server obtains the input data and the inference result corresponding to the input data, the second server screens or modifies the input data and the inference result based on whether the inference result is correct. For a correct inference result, the second server adds the inference result and input data corresponding to the inference result to the retraining sample set. Alternatively, after the input data corresponding to the correct inference result is annotated, the annotated input data and the inference result corresponding to the input data are stored in the retraining sample set. For an incorrect inference result, the second server deletes the inference result and input data corresponding to the inference result, or the second server modifies the incorrect inference result to a correct inference result, and adds the modified inference result and the input data (or the annotated input data) to the retraining sample set, to obtain the retraining sample set used for model retraining.

S607: The second server performs model retraining on the first training model based on the retraining sample set, to determine a second training model.

In response to the retraining instruction received by the second server, the second server performs model retraining on the first training model by using the retraining sample set determined by the second server in the step S606, to obtain the second training model. Then, the second server replaces the first training model stored in the second server with the second training model. Optionally, the second server further stores description information of the second training model. For specific description of the description information, refer to the foregoing content. Details are not described herein again.

S608: The second server sends the second training model to the first server.

The second server delivers, to the first server, the retraining sample set determined by the second server in the step S606, the second training model obtained by performing model retraining on the first training model, and the description information of the second training model. The first server replaces the first training model stored in the first server with the second training model, and stores the description information of the second training model. Then, the first server further publishes the second training model as a service, so that the user may invoke the second training model through the service to perform model inference. Optionally, the first server deletes the service corresponding to the first training model, or replaces the service corresponding to the first training model with a service corresponding to the second training model.

In the foregoing process, the second server retrains the first training model by using the correct inference result and the input data corresponding to the correct inference result, to obtain the second training model, which may well improve an inference effect of the second training model, thereby ensuring performance of a service system in which the second training model is located.

Optionally, in a possible implementation, the retraining instruction sent by the first server to the second server may be specific to the preset model, so that the second server performs model retraining on the preset model based on the retraining sample set determined in the step S606, to obtain the second training model. Then, the second server replaces the first training model stored in the second server with the second training model, and stores the description information of the second training model. For a description of the preset model, refer to the foregoing content. Details are not described herein again.

It should be noted that, compared with the second training model obtained by retraining the first training model based on the retraining sample set determined in the step S606, the second training model determined by performing model retraining on the preset model based on the retraining sample set determined in the step S606 is more applicable to the current scenario, but has a poor generalization capability. In other words, an inference effect when the previous data is used as the input data of the second training model cannot be ensured.

According to the foregoing embodiment, this application provides a model training method applied to a hybrid cloud scenario, which may evaluate the model evaluation metrics of the first training model, to determine the inference effect of the first training model, and monitor the inference effect of the first training model. Therefore, when the first training model has a poor inference effect, the retraining instruction used for model retraining is sent to the second server, so that the second server may retrain the training model in a timely manner based on the inference effect of the training model, to determine a training model with a better inference effect, thereby improving accuracy of the inference result, and ensuring performance of the service system.

As shown in FIG. 8, this application further provides a model training apparatus, which is applied to a system of a first server and a second server. The first server is located in a private cloud and is used for model inference, and the second server is located in a public cloud and is used for model training. The apparatus serving as a first server may be configured to perform the steps performed by the first server in the foregoing method embodiments. The apparatus includes an obtaining unit 801, an inference unit 802, an evaluation unit 803, and a sending unit 804.

The obtaining unit 801 is configured to obtain a first training model from the second server.

The inference unit 802 is configured to input input data into the first training model for model inference, to obtain an inference result.

The evaluation unit 803 is configured to evaluate the first training model based on the inference result and a model evaluation metric, to obtain an evaluation result of the model evaluation metric.

The model evaluation metric includes at least one of the following: accuracy of the inference result, precision of the inference result, recall of the inference result, F1-score (F1-Score) of the inference result, and an area under a receiver operating characteristic ROC curve AUC of the inference result.

The sending unit 804 is configured to: if an evaluation result of at least one model evaluation metric does not exceed a preset threshold corresponding to the model evaluation metric, send a retraining instruction for the first training model to a second server. The retraining instruction instructs the second server to retrain the first training model.

Optionally, the sending unit 804 is further configured to send the input data and the inference result to the second server. The input data and the inference result are used to retrain the first training model.

Optionally, the sending unit 804 is further configured to: if all evaluation results of model evaluation metrics exceed preset thresholds corresponding to the model evaluation metrics, skip sending a retraining instruction for the first training model to the second server.

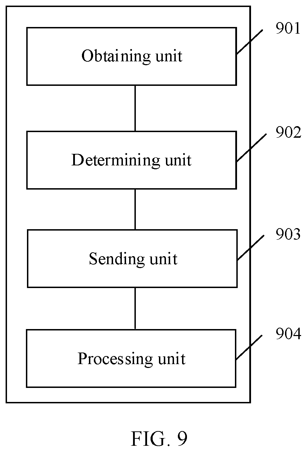

As shown in FIG. 9, this application further provides a model training apparatus, which is applied to a system of a first server and a second server. The first server is located in a private cloud and is used for model inference, and the second server is located in a public cloud and is used for model training. The apparatus serving as a second server may be configured to perform the steps performed by the second server in the foregoing method embodiments. The apparatus includes an obtaining unit 901, a determining unit 902, a sending unit 903, and a processing unit 904.

The obtaining unit 901 is configured to obtain a retraining instruction for a first training model, input data, and an inference result from the first server. The retraining instruction instructs the second server to retrain the first training model, the input data is data that is input, by the first server, into the first training model for model inference, and the inference result is a result obtained after the first server inputs the input data into the first training model for model inference.

The obtaining unit 901 is specifically configured to obtain the input data and the inference result in response to the retraining instruction received from the first server.

The determining unit 902 is configured to determine a retraining sample set based on the input data and the inference result.

The processing unit 904 is configured to: if the inference result is a correct inference result, reserve, by the second server, the inference result and input data corresponding to the inference result; or if the inference result is an incorrect inference result, delete, by the second server, the inference result and input data corresponding to the inference result, or replace, by the second server, the inference result with a correct inference result corresponding to the input data.

The determining unit 902 is specifically configured to: annotate the input data, to obtain the annotated input data; and store the annotated input data and the inference result in the retraining sample set.

The determining unit 902 is further configured to retrain the first training model based on the retraining sample set, to determine a second training model. The second training model is used to replace the first training model.

The sending unit 903 is configured to send the second training model to the first server.

An embodiment of this application further provides a computer-readable storage medium. The computer-readable storage medium stores instructions. When the instructions are run by a processor, the method in the foregoing method embodiments is performed.

An embodiment of this application further provides a computer program product including instructions. When the instructions are run by a processor on the computer, the computer is enabled to perform the method in the foregoing method embodiments.

An embodiment of this application further provides a chip. The chip includes a transceiver unit and a processing unit. The transceiver unit may be an input/output circuit or a communication interface. The processing unit is a processor, a microprocessor, or an integrated circuit that is integrated on the chip. The chip may perform the method in the foregoing method embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

All or some of the foregoing embodiments may be implemented by using software, hardware, firmware, or any combination thereof. When embodiments are implemented by using a software program, embodiments may appear in a form of a computer program product as a whole or in part. The computer program product includes one or more computer instructions. When the computer program instructions are loaded and executed on the computer, the procedure or functions according to embodiments of this application are all or partially generated.

The computer may be a general-purpose computer, a dedicated computer, a computer network, or any other programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in another manner. For example, the described apparatus embodiments are merely examples. For example, the module or unit division is merely logical function division and there may be another division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate components may be physically separate or may not be physically separate, and components displayed as units may be one or more physical units, that is, may be located in one place, or may be distributed on a plurality of different places. In an application process, some or all of the units may be selected according to actual requirements to achieve the objectives of the solutions in embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of embodiments of this application essentially, or a part contributing to the current technology, or a part of the technical solutions may be implemented in the form of a software product. The computer software product is stored in a storage medium and includes several instructions for instructing a device (which may be a personal computer, a server, a network device, a single-chip microcomputer, a chip, or the like) or a processor (processor) to perform all or some of the steps of the methods described in embodiments of this application. The storage medium includes any medium such as a USB flash drive, a removable hard disk, a read-only memory (read-only memory, ROM), a random access memory (random access memory, RAM), a magnetic disk, or an optical disc, that can store program code.

The foregoing descriptions are only specific implementations of this application, but are not intended to limit the protection scope of this application. Any variation or replacement within the technical scope disclosed in this application shall fall within the protection scope of this application.

## Claims

1. A model training method, applied to a system comprising a first server and a second server, wherein the first server is located in a private cloud and is used for model inference, the second server is located in a public cloud and is used for model training, and the method comprises:
obtaining, by the first server, a first training model from the second server;
inputting, by the first server, input data into the first training model for model inference, to obtain an inference result;
evaluating, by the first server, the first training model based on the inference result and a model evaluation metric, to obtain an evaluation result of the model evaluation metric; and
if an evaluation result of at least one model evaluation metric is less than or equal to a preset threshold corresponding to the model evaluation metric, sending, by the first server, a retraining instruction for the first training model to the second server, wherein the retraining instruction instructs the second server to retrain the first training model.

2. The model training method according to claim 1, wherein after the inputting, by the first server, input data into the first training model for model inference, to obtain an inference result, the method further comprises:
sending, by the first server, the input data and the inference result to the second server, wherein the input data and the inference result are used to retrain the first training model.

3. The model training method according to claim 1 or 2, wherein the model evaluation metric comprises at least one of the following: accuracy of the inference result, precision of the inference result, recall of the inference result, F1-score F1-Score of the inference result, and an area under a receiver operating characteristic ROC curve AUC of the inference result.

4. The model training method according to any one of claims 1 to 3, wherein the method comprises: if all evaluation results of model evaluation metrics exceed preset thresholds corresponding to the model evaluation metrics, skipping sending, by the first server, a retraining instruction for the first training model to the second server.

5. A model training method, applied to a system comprising a first server and a second server, wherein the first server is located in a private cloud and is used for model inference, the second server is located in a public cloud and is used for model training, and the method comprises:
obtaining, by the second server, a retraining instruction for a first training model, input data, and an inference result from the first server, wherein the retraining instruction instructs the second server to retrain the first training model, the input data is data that is input into the first training model by the first server, and the inference result is a result obtained after the first server inputs the input data into the first training model for model inference;
determining, by the second server, a retraining sample set based on the input data and the inference result;
retraining, by the second server, the first training model based on the retraining sample set, to determine a second training model, wherein the second training model is used to replace the first training model; and
sending, by the second server, the second training model to the first server.

6. The model training method according to claim 5, wherein the obtaining, by the second server, a retraining instruction for a first training model, input data, and an inference result from the first server specifically comprises:
obtaining, by the second server, the input data and the inference result in response to the retraining instruction received from the first server.

7. The model training method according to claim 5 or 6, wherein the determining, by the second server, a retraining sample set based on the input data and the inference result specifically comprises:
annotating, by the second server, the input data, to obtain the annotated input data; and
storing, by the second server, the annotated input data and the inference result in the retraining sample set.

8. The model training method according to claim 7, wherein before the annotating, by the second server, the input data, to obtain the annotated input data, the method further comprises:
if the inference result is a correct inference result, reserving, by the second server, the inference result and input data corresponding to the inference result; or
if the inference result is an incorrect inference result, deleting, by the second server, the inference result and input data corresponding to the inference result, or replacing, by the second server, the inference result with a correct inference result corresponding to the input data.

9. A model training apparatus, applied to a system comprising a first server and a second server, wherein the first server is located in a private cloud and is used for model inference, the second server is located in a public cloud and is used for model training, and the apparatus serving as the first server comprises:
an obtaining unit, configured to obtain a first training model from the second server;
an inference unit, configured to input input data into the first training model for model inference, to obtain an inference result;
an evaluation unit, configured to evaluate the first training model based on the inference result and a model evaluation metric, to obtain an evaluation result of the model evaluation metric;
a sending unit, configured to: if an evaluation result of at least one model evaluation metric is less than or equal to a preset threshold corresponding to the model evaluation metric, send a retraining instruction for the first training model to the second server, wherein the retraining instruction instructs the second server to retrain the first training model.

10. The model training apparatus according to claim 9, wherein
the sending unit is further configured to send the input data and the inference result to the second server, wherein the input data and the inference result are used to retrain the first training model.

11. The model training apparatus according to claim 9 or 10, wherein the model evaluation metric comprises at least one of the following: accuracy of the inference result, precision of the inference result, recall of the inference result, F1-score F1-Score of the inference result, and an area under a receiver operating characteristic ROC curve AUC of the inference result.

12. The model training apparatus according to any one of claims 9 to 11, wherein
the sending unit is further configured to: if all evaluation results of model evaluation metrics exceed preset thresholds corresponding to the model evaluation metrics, skip sending a retraining instruction for the first training model to the second server.

13. A model training apparatus, applied to a system comprising a first server and a second server, wherein the first server is located in a private cloud and is used for model inference, the second server is located in a public cloud and is used for model training, and the apparatus serving as the second server comprises:
an obtaining unit, configured to obtain a retraining instruction for a first training model, input data, and an inference result from the first server, wherein the retraining instruction instructs the second server to retrain the first training model, the input data is data that is input into the first training model by the first server, and the inference result is a result obtained after the first server inputs the input data into the first training model for model inference;
a determining unit, configured to determine a retraining sample set based on the input data and the inference result, wherein
the determining unit is further configured to retrain the first training model based on the retraining sample set, to determine a second training model, wherein the second training model is used to replace the first training model; and
a sending unit, configured to send the second training model to the first server.

14. The model training apparatus according to claim 13, wherein
the obtaining unit is specifically configured to obtain the input data and the inference result in response to the retraining instruction received from the first server.

15. The model training apparatus according to claim 13 or 14, wherein
the determining unit is specifically configured to annotate the input data, to obtain the annotated input data; and
the determining unit is further specifically configured to store the annotated input data and the inference result in the retraining sample set.

16. The model training apparatus according to claim 15, wherein
the determining unit is configured to: if the inference result is a correct inference result, reserve, by the second server, the inference result and input data corresponding to the inference result; and
the determining unit is further configured to: if the inference result is an incorrect inference result, delete, by the second server, the inference result and input data corresponding to the inference result, or replace, by the second server, the inference result with a correct inference result corresponding to the input data.

17. A model training apparatus, wherein the apparatus comprises a processor, a memory, and a communication interface, the communication interface is configured to communicate with another device or a communication network, the memory is configured to store one or more programs, the one or more programs comprise computer-executable instructions, and when the apparatus runs, the processor executes the computer-executable instructions stored in the memory, to enable the apparatus to perform the model training method according to any one of claims 1 to 4 or 5 to 8.

18. A computer-readable storage medium, wherein the computer-readable storage medium stores program instructions, and when the program instructions are run by a processor, the model training method according to any one of claims 1 to 4 or 5 to 8 is implemented.

19. A computer program product comprising instructions, wherein when the computer program product is run by a processor on a computer, the computer is enabled to perform the model training method according to any one of claims 1 to 4 or 5 to 8.
